# EUROPEAN PATENT APPLICATION

(11) **EP 2 498 493 A1**
(43) Date of publication of application: **12.09.2012**
(21) Application number: 10827898.7
(22) Date of filing: 02.11.2010
(51) Int. Cl.: H04N 7/18

(54) **VIDEO MONITORING SYSTEM AND CONTROL METHOD THEREOF**

(30) Priority: 06.11.2009 CN 200910174486
(71) Applicant: ZTE Corporation, Shenzhen, Guangdong 518057 (CN)
(72) Inventor: LIU, Xuewen, Shenzhen Guangdong 518057 (CN); ZHONG, Zeming, Shenzhen Guangdong 518057 (CN); WANG, Liang, Shenzhen Guangdong 518057 (CN)
(74) Representative: Anderson, Angela Mary
(86) International application number: PCT/CN2010/078355
(87) International publication number: WO 2011/054284

(57) **Abstract**

The present invention discloses a video monitoring system and a control method thereof, wherein the method includes: a signaling interface gateway respectively receiving a control signaling from a digital video monitoring system and/or an analog video monitoring system; and respectively converting the control signaling from the digital video monitoring system and/or the control signaling from the analog video monitoring system via the signaling interface gateway. The method and system of the present invention enable the analog video monitoring system and the digital video monitoring system to control each other and use each other's resources.

## Description

### Technical Field

The present invention relates to the field of security monitoring, and more especially, to a video monitoring system and a control method thereof.

### Background of the Related Art

To date, with the rapid development of the digital video monitoring system technology, the digital video monitoring system has been used in more and more places, moreover, with the development of network technology, the security investment by the nation and the operators' participation, many large-scale digital video monitoring systems are established, and the monitoring network covers one city, one province, or even one country. In the digital video monitoring system, an increasing variety of extensions are added to connect multiple systems, thus achieving some new features and expanding the application scope of the original system.

Since a large number of analog video monitoring systems are established before the establishment of the digital monitoring system, the analog video monitoring system is generally composed of an analog camera, a video matrix, a storage device, a TV wall display device and so on, and these devices are mainly controlled through the RS485 bus and connecting the control keyboard, the matrix and the front-end camera, and the system mainly switches and distributes the analog video signal, amplifies and shapes the video signals, performs the corresponding switching and calling between the input video signal and the output video signal, and control the front-end analog camera lens and Pan Tilt Zoom through the video matrix system.

For a long period of time in the future, the analog video monitoring system and the digital video monitoring system will co-exist, which requires to achieve the integration of the analog video monitoring system and the digital video monitoring system and to make the analog system and the digital system control each other, which has a very wide range of market demand. At present, the method of adding special devices such as the RS485 sharer, the matrix networking controller and so on is often utilized to achieve the simple control function of the digital video monitoring system on the analog matrix system, the analog matrix system, however, cannot control the digital monitoring devices in the network monitoring system.

Therefore, for the problem that the analog video monitoring system and the digital video monitoring system cannot control each other, there is no effective solution provided in the prior art.

### Summary of the Invention

The main purpose of the present invention is to provide a video monitoring system and a control method thereof to solve the problem that the analog video monitoring system and the digital video monitoring system cannot control each other in the prior art.

The present invention provides a control method of video monitoring system, and the method comprises: a signaling interface gateway respectively receiving a control signaling from a digital video monitoring system and/or an analog video monitoring system; performing conversion of the control signaling from the digital video monitoring system and/or the control signaling from the analog video monitoring system via the signaling interface gateway respectively.

Preferably, the conversion of the control signal comprises: signaling conversion between the digital system and the analog system; before performing the conversion of the control signal, the method also comprises: establishing a corresponding relationship table in the signaling interface gateway; wherein, the corresponding relationship table represents a mapping relationship between channels of the digital video monitoring system and channels of the analog video monitoring system; converting the control signaling from the analog video monitoring system into a control signaling which is recognizable by the digital video monitoring system according to the corresponding relationship table, and sending the control signaling to the digital video monitoring system; converting the control signaling from the digital video monitoring system into a control signaling which is recognizable by the analog video monitoring system according to the corresponding relationship table, and sending the control signaling to the analog video monitoring system.

Preferably, after performing mutual conversion of the control signals, the method also comprises: performing video conversion between a digital video stream and an analog video stream, and the video conversion further comprises: converting the analog video stream from the analog video monitoring system into a digital video stream via an encoder, and sending it to the digital video monitoring system; converting the digital video stream from the digital video monitoring system into an analog video stream via a decoder, and sending it to the analog video monitoring system.

Preferably, after performing the video conversion between the digital video stream and the analog video stream, the method also comprises: the analog video monitoring system using video resources or cameras of the digital video monitoring system via the signaling interface gateway; the digital video monitoring system using video resources or cameras of the analog video monitoring system via the signaling interface gateway.

According to another aspect of the present invention, a video monitoring system is also provided, and the system comprises: a digital video monitoring system, an analog video monitoring system, and a signaling interface gateway, wherein, the signaling interface gateway is used for respectively receiving a control signaling from the digital video monitoring system and/or the analog video monitoring system, and respectively converting the control signaling from the digital video monitoring system and/or the control signaling from the analog video monitoring system.

Preferably, the signaling interface gateway further comprises: a receiving module, which is used for respectively receiving the control signaling from the digital video monitoring system and/or the control signaling from the analog video monitoring system; a command conversion module, which is used for performing mutual conversion of the control signaling from the digital video monitoring system and/or the control signaling from the analog video monitoring system respectively, wherein, the conversion of control signaling comprises: signaling conversion between the digital system and the analog system; a transmitting module, which is used for transmitting the converted control signaling.

Preferably, the command conversion module further comprises: an establishment module, which is used for establishing a corresponding relationship table, wherein the corresponding relationship table represents a mapping relationship between channels of the digital video monitoring system and channels of the analog video monitoring system; a first conversion module, which is used for converting the control signaling from the analog video monitoring system into a control signaling which is recognizable by the digital video monitoring system according to the corresponding relationship table established by the establishment module; a second conversion module, which is used for converting the control signaling from the digital video monitoring system into a control signaling which is recognizable by the analog video monitoring system according to the corresponding relationship table established by the establishment module.

Preferably, the transmitting module further comprises: a first transmitting module, which is used for transmitting the control signaling converted by the first conversion module to the digital video monitoring system; a second transmitting module, which is used for transmitting the control signaling converted by the second conversion module to the analog video monitoring system.

Preferably, the system also comprises: an encoder, which is used for converting an analog video stream from the analog video monitoring system into a digital video stream, and sending it to the digital video monitoring system; a decoder, which is used for converting a digital video stream from the digital video monitoring system into an analog video stream, and sending it to the analog video monitoring system.

Compared with the related art, according to the technical solution of the present invention, the analog video monitoring system and the digital video monitoring system are integrated as a whole by adding the signaling interface gateway under the matrix control mode, so that the analog video monitoring system and the digital video monitoring system are able to control each other and use each other's resources without changing the respective operation habits of the digital and analog videos.

### Brief Description of Drawings

FIG. 1 is a flow schematic diagram of a control method of the video monitoring system in accordance with an embodiment of the present invention;
FIG. 2 is a structural schematic diagram of a system for the digital video monitoring system and the analog video monitoring system controlling each other in accordance with an embodiment of the present invention;
FIG. 3 is a flow schematic diagram of the video matrix system establishing a corresponding relationship with the digital video monitoring system in accordance with an embodiment of the present invention;
FIG. 4 is a flow schematic diagram of the analog video monitoring system calling the digital video monitoring resources via the video matrix system in accordance with an embodiment of the present invention;
FIG. 5 is a flow schematic diagram of the analog video monitoring system performing Pan Tilt Zoom (PTZ) control on the front-end camera belonging to the digital video monitoring platform via the matrix control keyboard in accordance with an embodiment of the present invention;
FIG. 6 is a flow schematic diagram of the digital video monitoring system calling the analog images of the analog video monitoring system in accordance with an embodiment of the present invention;
FIG. 7 is a flow schematic diagram of the digital video monitoring system performing the PTZ control on the front-end camera belonging to the analog video monitoring system via the client and the interface in accordance with an embodiment of the present invention;
FIG. 8 is a structural schematic diagram of the video monitoring system in accordance with an embodiment of the present invention;
FIG. 9 is a schematic diagram of one preferred structure of the video monitoring system in accordance with an embodiment of the present invention;
FIG. 10 is a schematic diagram of another preferred structure of the video monitoring system in accordance with an embodiment of the present invention.

### Preferred Embodiments of the Present Invention

The main idea of the present invention is mainly to configure a signaling interface gateway, and the respective control signaling within two systems is translated and converted via the signaling interface gateway to achieve the control signaling interworking function between the two systems. On the basis of achieving the control signaling interworking, the resource calling and mutual control of the devices can be achieved. The signaling interface gateway can be installed in the PC machine or the PC server as a stand-alone network element in the digital video monitoring system, or encapsulated in the embedded device to form a dedicated signaling interface gateway device.

In order to make the purpose, the technical solution and advantages of the present invention clearer, the present invention will be described in further detail in the following in combination with the accompanying drawings and specific embodiments.

In order to better understand the present invention, the digital video monitoring system and the analog video monitoring system mentioned in the present invention are introduced firstly. The digital video monitoring system mentioned in the present invention comprises but not limited to the following devices: the video capturing and encoding device, including: the digital video server (DVS), the IP Camera, and the embedded network hard disk video recorder (DVR); the media server and the storage device; the system management platform; the software client, the decoder and other devices. The analog video monitoring system mentioned in the present invention comprises but not limited to the following devices: the matrix host and the matrix control keyboard of the video matrix system, the analog video monitoring camera, the storage device, the TV wall display device and so on.

According to an embodiment of the present invention, a control method of the video monitoring system is provided.

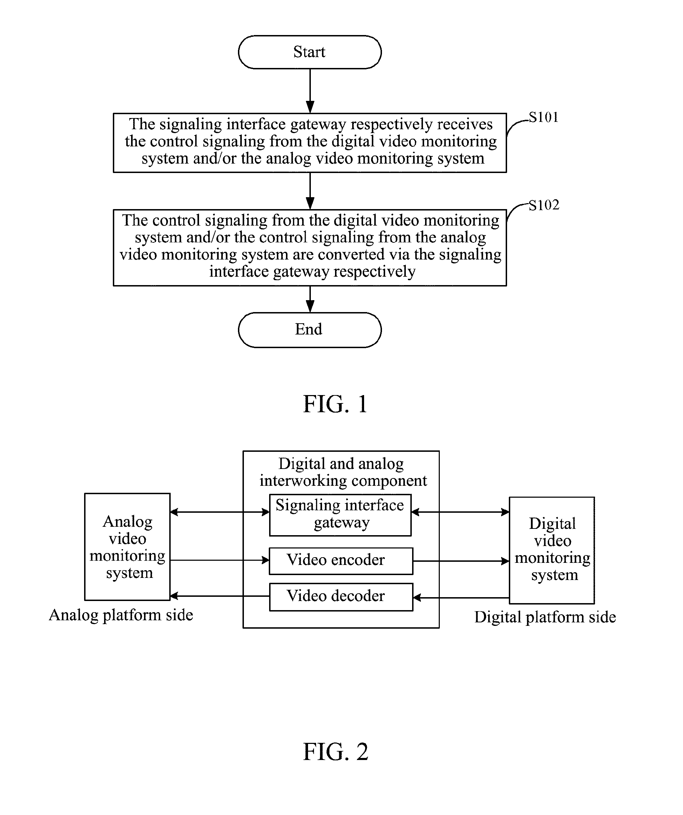

FIG. 1 is a flow schematic diagram of a control method of the video monitoring system in accordance with the embodiment of the present invention, and as shown in FIG. 1, the method comprises:
in step S101, the signaling interface gateway respectively receives control signaling from the digital video monitoring system and/or the analog video monitoring system;
in step S102, the control signaling from the digital video monitoring system and/or the control signaling from the analog video monitoring system are converted via the signaling interface gateway respectively.

Specifically, the purpose of the conversion of control signaling is to make the digital video monitoring system and the analog video monitoring system perform mutual control, wherein, the conversion of control signaling comprises at least one of the following: digital to analog conversion, and analog to digital conversion.

Specifically, step S 102 further comprises: establishing a corresponding relationship table in the signaling interface gateway, wherein, the corresponding relationship table represents the mapping relationship between the channels of the digital video monitoring system and the channels of the analog video monitoring system; according to the corresponding relationship table, converting the control signaling from the analog video monitoring system into a control signaling which is recognizable by the digital video monitoring system, and sending the control signaling to the digital video monitoring system; according to the corresponding relationship table, converting the control signaling from the digital video monitoring system into a control signaling which is recognizable by the analog video monitoring system, and sending the control signaling to the analog video monitoring system.

FIG. 2 is a structural diagram of a system for the digital video monitoring system and the analog video monitoring system controlling each other in accordance with an embodiment of the present invention, and as shown in FIG. 2, a signaling interface gateway is added between the digital video monitoring system and the analog video monitoring system, and the mutual conversion of signaling can be achieved via the signaling interface gateway, and at the analog platform side, the analog matrix control signaling is utilized to perform PTZ control via the video matrix; at the digital platform side, the signaling from the digital video monitoring system is utilized to fulfill the corresponding function. Moreover, the video encoder (DVS array) is utilized to convert the analog video stream from the analog video monitoring system into a digital video stream, and send it to the digital video monitoring system; the video decoder is utilized to convert the digital video stream from the digital video monitoring system into an analog video stream, and send it to the analog video monitoring system.

The analog video monitoring system assigns a user ID to the digital video monitoring system, and the digital platform side uses the user ID to access the video resources in the analog video monitoring system, and the monitoring points in the analog video monitoring system that can be accessed by the digital platform side should be configured to the digital video monitoring system in advance, that is, establishing the analog system to digital system mapping relationship, and a special ID indicator should be utilized to distinguish the digital video sources from the analog video sources to facilitate the digital video monitoring system managing and querying these analog video sources. At the digital platform side, it also needs to subdivide and configure the permissions for the user to access the digital video sources and/or the analog video sources, comprising the real-time video access permission, the PTZ control permission and the video playback permission.

The digital video monitoring system also needs to assign a user account to the analog video monitoring system, and the matrix operator in the analog monitoring system uses the user account to access the monitoring points in the digital video monitoring system, and the monitoring points that can be accessed by the analog matrix system in the digital video monitoring system need to be configured to the analog matrix, that is, establishing the digital video to analog video mapping relationship, and the digital video channel corresponds to an analog channel that can be controlled by the matrix.

The signaling interface gateway and the digital video monitoring system can be connected via the Internet Protocol (IP) approach, and the signaling interface gateway and the analog video monitoring system can be connected via the RS232 interface or IP approach, when the IP approach is selected to carry out a connection, the video matrix system in the analog video monitoring system also must select a networking matrix controlled by the IP approach, and as long as the signaling interface gateway is utilized to connect the digital video monitoring system and the video matrix host to the same network, thus ensuring that both sides can visit each other, and a public or private network address can be used, and in order to ensure the corresponding relationship between the video matrix host and the signaling interface gateway, it is recommended that both the signaling interface gateway and the video matrix host are configured with fixed IP addresses, that is, the static IP addresses. Since the signaling interface gateway and the video matrix host can be distributed in different physical locations, one device with the signaling interface gateway can correspond to multiple video matrix hosts, and the system design is flexible. For an ordinary video matrix host without the IP networking control approach, the RS232 approach can be utilized to establish the communication, and the signaling interface gateway establishes a connection with the video matrix host via the RS232 interface, and this approach requires that the signaling interface gateways are configured to correspond to the video matrix hosts one by one.

The implementation process of the present invention will be introduced in detail in the following in combination with the specific embodiments.

The present invention enables the video matrix system in the analog video monitoring system and the digital video monitoring system to connect with each other, and a signaling interface gateway is added and the simple development in the video matrix system is performed, and the one to one mapping relationship of the video channels in the video matrix system and the digital video monitoring system is established, thereby achieving a unified interface integration and mutual control function between the digital and analog systems.

First, the interface between the signaling interface gateway of digital video monitoring system and the video matrix system is defined to establish a link, keep alive and transport messages and so on between the signaling interface gateway of digital video monitoring system and the video matrix system. Specifically, the signaling interface gateway and the video matrix system can be connected via the IP connection or the UDP link, and the RS232 interface can also be used to communicate. Moreover, the message body contains the specific content of the request or response.

Second, a small amount of customization developments are performed in the video matrix system software, and the video matrix system message including the video playback request, the PTZ control signaling, and the user account password and so on is actively transmitted to the signaling interface gateway in accordance with the defined interface standards.

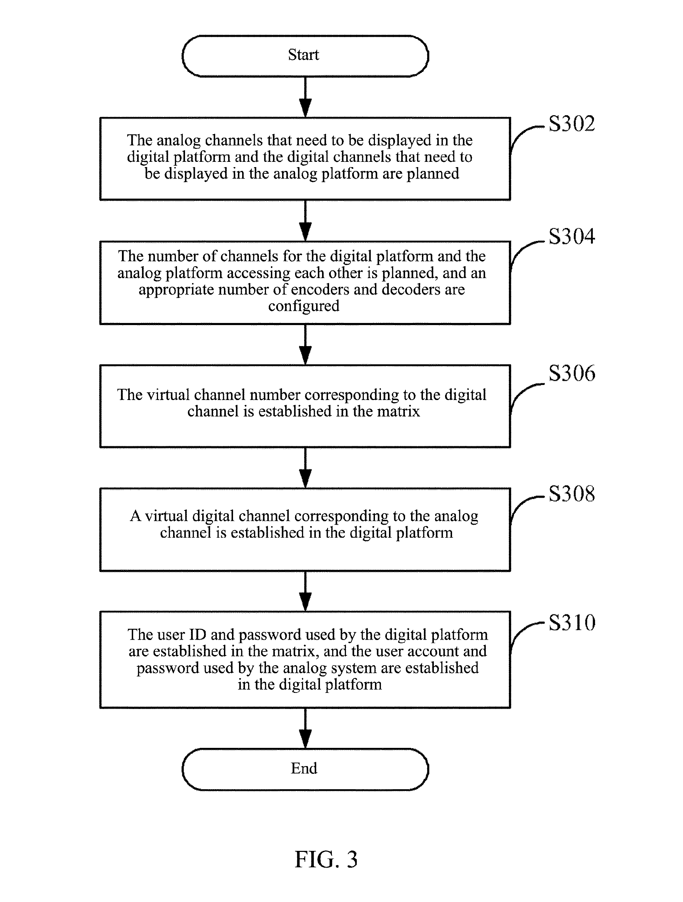

The embodiments of the present invention are described in detail in the following in combination with FIGs 3 to 6.

FIG. 3 is a flow schematic diagram of the video matrix system establishing a corresponding relationship with the digital video monitoring system in accordance with an embodiment of the present invention, and as shown in FIG. 3, the process comprises:
in step S302, the analog channels that need to be displayed in the digital platform and the digital channels that need to be displayed in the analog platform are planned, including which channels and the number of channels, and the corresponding relationship table in the signaling interface gateway is established;
in step S304, the number of channels for the digital platform and the analog platform accessing each other is planned, and an appropriate number of encoders and decoders are configured according to the concurrent access requirements;
in step S306, the virtual channel number corresponding to the digital channel is established in the matrix and the EXCEL spreadsheet importing is supported;
in step S308, a virtual digital channel corresponding to the analog channel is established in the digital platform and the batch adding is supported;
in step S310, the system access user group and permission assignment are planned, and the user ID and password used by the digital platform are established in the matrix, and the user account and password used by the analog system are established in the digital platform.

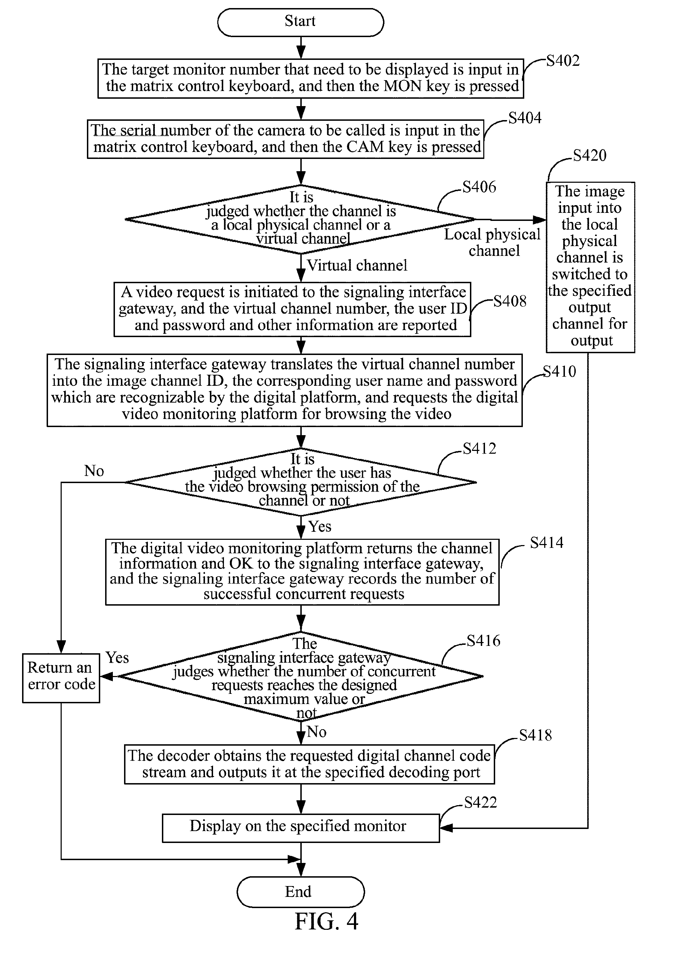

FIG. 4 is a flow schematic diagram of the analog video monitoring system calling the digital video monitoring resources via the video matrix system in accordance with an embodiment of the present invention, and as shown in FIG. 4, the process comprises:
in step S402, the target monitor number that need to be displayed is input in the matrix control keyboard, and then the MON key is pressed, and the window which is finally used to display the video image is selected;
in step S404, the serial number of the camera to be called is input in the matrix control keyboard, and then the CAM key is pressed to select the video channel to be displayed, and the video channel comprises the local physical channel or the virtual channel corresponding to the digital platform;
in step S406, it is judged whether the channel is a local physical channel or a virtual channel, if it is a virtual channel, proceed to step S408, if it is a local physical channel, proceed to step S420;
in step S408, if the input number is the virtual channel number, the matrix initiates a video request to the signaling interface gateway, reports the virtual channel number, the operator's user ID and password and other information;
in step S410, according to predetermined correspondence relationship table, the signaling interface gateway translates the virtual channel number sent by the matrix into the image channel ID, the corresponding user name and password which are recognizable by the digital video monitoring platform, and requests the digital video monitoring platform for browsing the video;
in step S412, the digital video monitoring platform judges whether the user has the permission of requesting the channel video browsing or not, if no permission, an error is returned to the matrix and the video request process ends, otherwise proceed to step S414;
in step S414, the digital video monitoring platform returns the channel information and OK to the signaling interface gateway, and the signaling interface gateway records the number of successful concurrent requests;
in step S416, the signaling interface gateway judges whether the number of concurrent requests reaches the designed maximum value or not, if the number of concurrent requests has exceeded the designed maximum value, an error is returned to the matrix and the video request process ends, otherwise proceed to step S418;
in step S418, the decoder obtains the requested digital channel code stream and outputs it to the specific input port of the video matrix system at the specified decoding port, and the video matrix system switches the video at the input port to the specified channel for output, and proceed to step S422;
in step S420, the image input into the local physical channel is switched to the specified output channel for output;
in step S422, the image is displayed on the specified monitor.

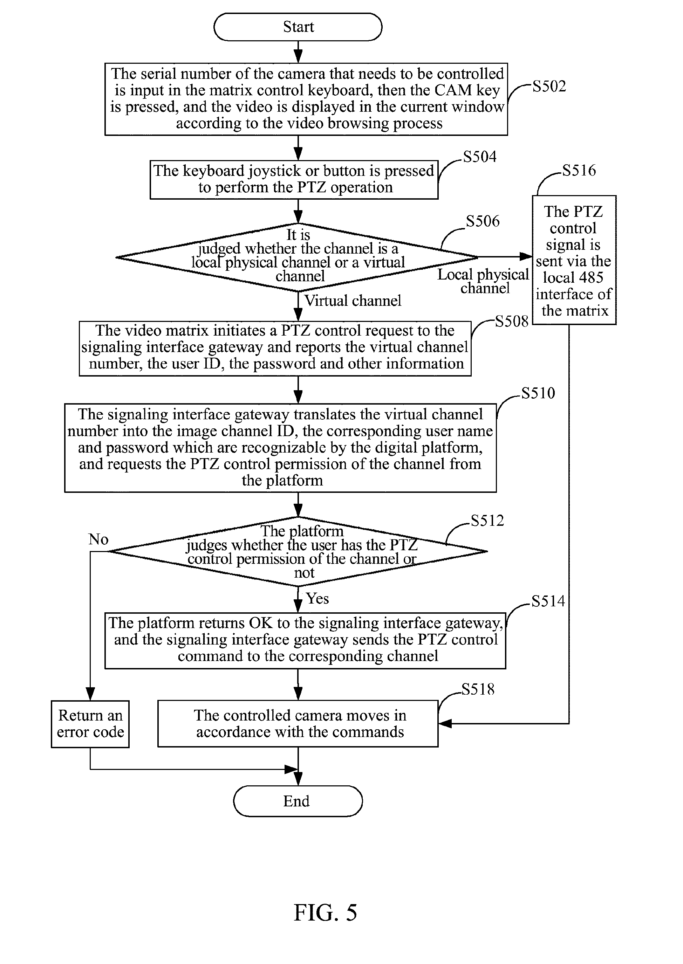

FIG. 5 is a flow chart of the analog video monitoring system performing the PTZ control on the front-end camera belonging to the digital video monitoring platform via the matrix control keyboard in accordance with an embodiment of the present invention, and as shown in FIG. 5, the process comprises:
in step S502, the serial number of the camera that needs to be controlled is input in the matrix control keyboard, then the CAM key is pressed, and the video is displayed in the current window according to the video browsing process; further if it is already the current channel, then skip the step S502.

In step S504, the keyboard joystick or button is utilized to perform the PTZ operation;
in step S506, it is judged whether the channel is a local physical channel or a virtual channel, and if it is a local physical channel, proceed to step S516, and if it is a virtual channel, proceed to step S508;
in step S508, the matrix control keyboard in the video matrix system initiates a PTZ control request to the signaling interface gateway to report the virtual channel number, the user ID, the password and other information;
in step S510, the signaling interface gateway translates the virtual channel number into the image channel ID, the corresponding user name and password recognizable by the digital platform, and requests the PTZ control permission of the channel from the platform;
in step S512, the platform judges whether the user has the PTZ control permission of the channel or not, if yes, proceed to step S514, otherwise, an error code is returned and the process ends;
in step S514, the platform returns OK to the signaling interface gateway, and the signaling interface gateway sends the PTZ control command to the corresponding channel, proceeding to step S518;
in step S516, the PTZ control signal is sent via the local 485 interface of the matrix;
in step S518, the controlled camera moves in accordance with the commands sent by the matrix control keyboard.

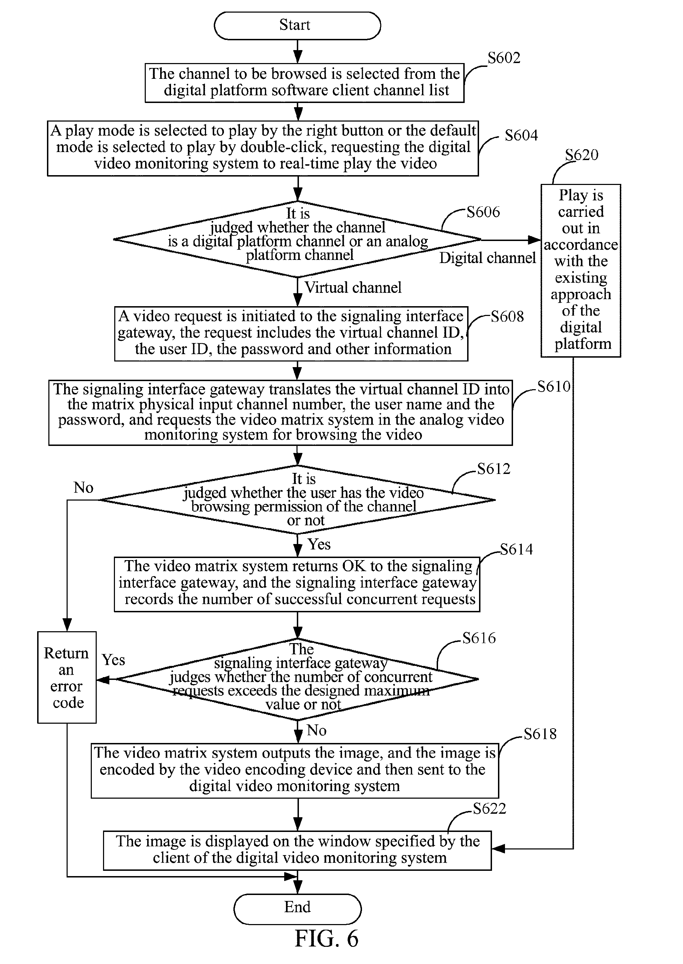

FIG. 6 is a flow schematic diagram of the digital video monitoring system calling the analog images of the analog video monitoring system in accordance with an embodiment of the present invention, and as shown in FIG. 6, the process comprises:
in step S602, the channel needed to be browsed is selected from the digital platform software client channel list;
in step S604, the right button of the mouse is utilized to select a play mode to play or the default mode is selected to play by double-click, requesting the digital video monitoring system to real-time play the video;
specifically, the play mode comprises: directly connecting the front-end or transit playing.

In step S606, the system judges whether the channel is a digital platform channel or an analog platform channel (virtual channel), and if it is a digital channel, proceed to step S620, and if it is a virtual channel, proceed to step S608;
in step S608, a video request is sent to the signaling interface gateway, and the request includes the virtual channel ID, the user account, the password and other information;
in step S610, the signaling interface gateway translates the virtual channel ID into the matrix physical input channel number, the user ID and the password, and requests the video matrix system in the analog video monitoring system for browsing the video;
in step S612, the video matrix system judges whether the user has the video viewing permission of the channel or not, if yes, proceed to step S614, otherwise an error code is returned and the process ends;
in step S614, the video matrix system returns OK to the signaling interface gateway, and the signaling interface gateway records the number of successful concurrent requests;
in step S616, the signaling interface gateway judges whether the number of concurrent requests exceeds the designed maximum value or not, if yes, an error code is returned and the process ends, otherwise proceed to step S618;
in step S618, the video matrix system switches the specified video channel image to the specific output port, and the image is encoded by the video encoding device and then sent to the digital video monitoring system, and it is used as one virtual channel video source to be called by the client of the digital video monitoring system, proceed to step S622;
in step S620, the channels in the digital platform are directly played in accordance with the existing process of the digital platform;
in step S622, the image is displayed on the window specified by the client of the digital video monitoring system.

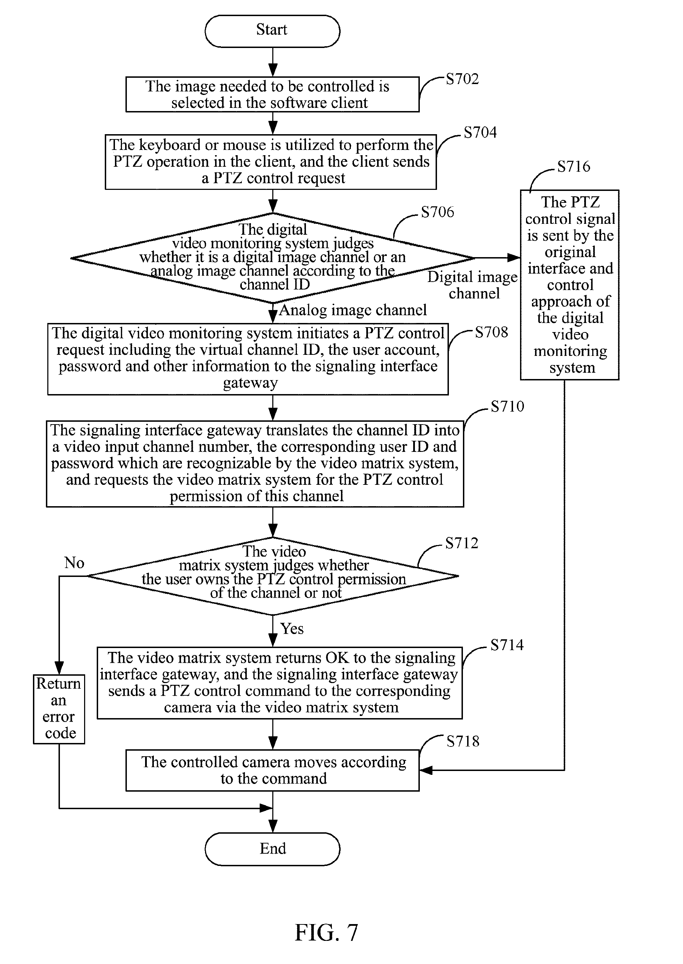

FIG. 7 is a flow schematic diagram of the digital video monitoring system performing the PTZ control on the front-end camera belonging to the analog video monitoring system via the client and the interface in accordance with an embodiment of the present invention, and as shown in FIG. 7, the process comprises:
in step S702, the image needed to be controlled is selected in the software client, and the video is displayed in the current window in accordance with the video browsing process; furthermore, if it is already the current image, skip the step S702;
in step S704, the keyboard or mouse is utilized to perform the PTZ operation in the client, and the client sends a PTZ control request;
in step S706, the digital video monitoring system judges whether it is a digital image channel or an analog image channel according to the channel ID, if it is a digital channel, proceed to S716, and if it is an analog channel, proceed to S708;
in step S708, the digital video monitoring system initiates a PTZ control request, along with the virtual channel ID, the digital platform user account, password and other information to the signaling interface gateway;
in step S710, the signaling interface gateway translates the virtual channel ID into a video input channel number, the corresponding user ID and password recognizable by the video matrix system, and requests the video matrix system for the PTZ control permission of this channel;
in step S712, the video matrix system judges whether the user owns the PTZ control permission of the channel or not, if yes, proceed to S714, otherwise, an error code is returned and the process ends;
in step S714, the video matrix system returns OK to the signaling interface gateway, and the signaling interface gateway sends a PTZ control command to the corresponding camera via the video matrix system, proceed to step S718;
in step S716, the PTZ control signal is sent through the original interface and control approach of the digital video monitoring system;
in step S718, the controlled camera moves according to the PTZ command sent by the digital video monitoring system.

According to the aforementioned embodiment, the analog video monitoring system and the digital video monitoring system can control each other and use each other's resources.

### The system embodiment

According to the embodiment of the present invention, a video monitoring system is also provided.

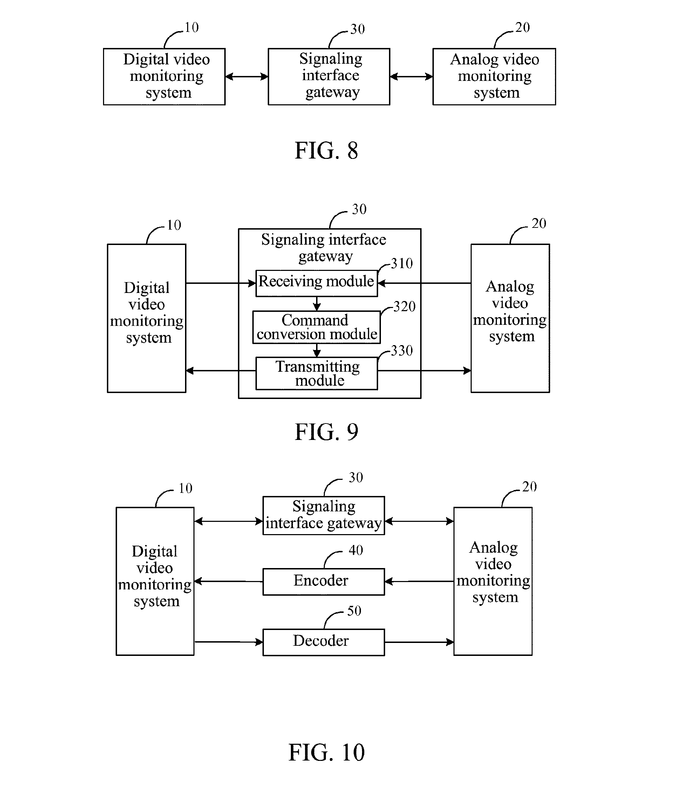

FIG. 8 is a structural schematic diagram of the video monitoring system in accordance with the embodiment of the present invention, and as shown in FIG. 8, the system comprises: a digital video monitoring system 10, an analog video monitoring system 20, and a signaling interface gateway 30.

The signaling interface gateway 30 respectively connects with the digital video monitoring system 10 and the analog video monitoring system 20, and it is used for respectively receiving the control signaling from the digital video monitoring system and/or the analog video monitoring system, and respectively converting the control signaling from the digital video monitoring system 10 and/or the control signaling from the analog video monitoring system 20. Wherein, the conversion of control signaling comprises at least one of the following: digital to analog conversion, and analog to digital conversion.

FIG. 9 is a schematic diagram of one preferred structure of the video monitoring system in accordance with an embodiment of the present invention, and FIG. 10 is a schematic diagram of another preferred structure of the video monitoring system in accordance with an embodiment of the present invention.

As shown in FIG. 9, on the basis of FIG. 8, the signaling interface gateway 30 further comprises:
a receiving module 310 for respectively receiving the control signaling from the digital video monitoring system and/or the analog video monitoring system; a command conversion module 320, which is connected with the receiving module 310 and used for performing the mutual conversion of the control signaling from the digital video monitoring system and/or the control signaling from the analog video monitoring system respectively; a transmitting module 330, which is connected with the command conversion module 320 and used for transmitting the converted control signaling.

Moreover, the command conversion module 320 might further comprise: an establishment module for establishing the corresponding relationship table, wherein the corresponding relationship table represents the mapping relationship between the channels of the digital video monitoring system and the channels of the analog video monitoring system; a first conversion module for converting the control signaling from the analog video monitoring system into a control signaling which is recognizable by the digital video monitoring system according to the corresponding relationship table established by the establishment module; a second conversion module for converting the control signaling from the digital video monitoring system into a control signaling which is recognizable by the analog video monitoring system according to the corresponding relationship table established by the establishment module.

The transmitting module further comprises: a first transmitting module for transmitting the control signaling converted by the first conversion module to the digital video monitoring system; a second transmitting module for transmitting the control signaling converted by the second conversion module to the analog video monitoring system.

As shown in FIG. 10, on the basis of FIG. 8, the system also comprises: an encoder 40 and a decoder 50. The encoder 40 is used for converting the analog video stream from the analog video monitoring system into a digital video stream, and sending it to the digital video monitoring system 10; the decoder 50 is used for converting a digital video stream from the digital video monitoring system 10 into an analog video stream, and sending it to the analog video monitoring system 20.

In a specific application process, the specific working process of the video monitoring system can refer to FIGs 1 to 7 in accordance with the embodiments of the present invention, which is not repeated here.

In summary, according to the aforementioned technical solution of the present invention, the signaling interface gateway is added to integrate the analog video monitoring system and the digital video monitoring system under the video matrix system control mode as a whole, to make the analog video monitoring system and the digital video monitoring system control each other and use each other's resources. With the present invention, the customer perception of using the system can be improved without changing the inherent operation modes and habits of the management personnel of original analog video monitoring system.

The above description is only the embodiments of the present invention and is not used to limit the present invention, and for those skilled in the field, the present invention might have a variety of changes and modifications. Any change, equivalent replacement, improvement and so on made within the spirit and principles of the present invention should be included within the scope of the claims of the present invention.

## Claims

1. A control method of a video monitoring system, comprising:
a signaling interface gateway respectively receiving control signaling from a digital video monitoring system and/or an analog video monitoring system;
performing conversion of the control signaling from the digital video monitoring system and/or the control signaling from the analog video monitoring system via the signaling interface gateway respectively.

2. The method of claim 1, wherein, the conversion of the control signal comprises:
signaling conversion between digital system and analog system;
before performing conversion of the control signal, the method further comprises:
establishing a corresponding relationship table in the signaling interface gateway, the corresponding relationship table representing a mapping relationship between channels of the digital video monitoring system and channels of the analog video monitoring system;
converting the control signaling from the analog video monitoring system into a control signaling which is recognizable by the digital video monitoring system according to the corresponding relationship table, and sending the control signaling to the digital video monitoring system;
converting the control signaling from the digital video monitoring system into a control signaling which is recognizable by the analog video monitoring system according to the corresponding relationship table, and sending the control signaling to the analog video monitoring system.

3. The method of claim 1 or 2, wherein, after performing mutual conversion of the control signal, the method further comprises: performing video conversion between a digital video stream and an analog video stream;
the video conversion further comprises:
converting the analog video stream from the analog video monitoring system into the digital video stream via an encoder, and sending the digital video stream to the digital video monitoring system;
converting the digital video stream from the digital video monitoring system into the analog video stream via a decoder, and sending the analog video stream to the analog video monitoring system.

4. The method of claim 3, wherein, after performing the video conversion between the digital video stream and the analog video stream, the method further comprises:
the analog video monitoring system using video resources or cameras of the digital video monitoring system via the signaling interface gateway;
the digital video monitoring system using video resources or cameras of the analog video monitoring system via the signaling interface gateway.

5. A video monitoring system, comprising: a digital video monitoring system, an analog video monitoring system and a signaling interface gateway, wherein,
the signaling interface gateway is configured to respectively receive control signaling from the digital video monitoring system and/or the analog video monitoring system, and respectively perform conversion of the control signaling from the digital video monitoring system and/or the control signaling from the analog video monitoring system.

6. The system of claim 5, wherein, the signaling interface gateway further comprises:
a receiving module, configured to respectively receive the control signaling from the digital video monitoring system and/or the control signaling from the analog video monitoring system;
a command conversion module, configured to perform mutual conversion of the control signaling from the digital video monitoring system and/or the control signaling from the analog video monitoring system respectively, wherein, the conversion of the control signaling comprises: signaling conversion between digital system and analog system;
a transmitting module, configured to transmit the converted control signaling.

7. The system of claim 6, wherein, the command conversion module further comprises:
an establishment module, configured to establish a corresponding relationship table, wherein the corresponding relationship table represents a mapping relationship between channels of the digital video monitoring system and channels of the analog video monitoring system;
a first conversion module, configured to convert the control signaling from the analog video monitoring system into a control signaling which is recognizable by the digital video monitoring system according to the corresponding relationship table established by the establishment module;
a second conversion module, configured to convert the control signaling from the digital video monitoring system into a control signaling which is recognizable by the analog video monitoring system according to the corresponding relationship table established by the establishment module.

8. The system of claim 6 or 7, wherein, the transmitting module further comprises:
a first transmitting module, configured to transmit the control signaling converted by the first conversion module to the digital video monitoring system;
a second transmitting module, configured to transmit the control signaling converted by the second conversion module to the analog video monitoring system.

9. The system of claim 5 or 6, wherein, the system further comprises:
an encoder, configured to convert an analog video stream from the analog video monitoring system into a digital video stream, and sending the digital video stream to the digital video monitoring system;
a decoder, configured to convert the digital video stream from the digital video monitoring system into the analog video stream, and sending the analog video stream to the analog video monitoring system.
